# EUROPÄISCHE PATENTSCHRIFT

(11) **EP 2 341 803 B1**
(45) Veröffentlichungstag und Bekanntmachung des Hinweises auf die Patenterteilung: **02.01.2013**
(21) Anmeldenummer: 09793772.6
(22) Anmeldetag: 26.01.2009
(51) Int. Cl.: A47J 31/20

(54) **GETRÄNKEBEREITER MIT EINEM IN EIN GEFÄSS EINGESETZTEN EINSATZTEIL**
BEVERAGE PREPARATION DEVICE COMPRISING AN INSERT INSERTED INTO A RECEPTACLE
PRÉPARATEUR DE BOISSON POURVU D'UNE PARTIE RAPPORTÉE INSTALLÉE DANS UN RÉCIPIENT

(30) Priorität: 29.08.2008 CH 13842008
(43) Veröffentlichungstag der Anmeldung: 13.07.2011
(73) Patentinhaber: PI-DESIGN AG, 6234 Triengen (CH)
(72) Erfinder: BODUM, Jorgen, 6045 Meggen (CH)
(74) Vertreter: Detken, Andreas
(86) Internationale Anmeldenummer: PCT/CH2009/000031
(87) Internationale Veröffentlichungsnummer: WO 2010/003258

(56) Entgegenhaltungen:
- WO-A-2004/045349
- CH-A- 181 217
- DE-U1- 9 203 171
- US-B1- 6 945 014

## Beschreibung

### TECHNISCHES GEBIET

Die vorliegende Erfindung betrifft einen Getränkebereiter mit einem nach oben offenen Gefäss, das in einem Gefässhalter gehalten ist, und einem Einsatzteil, beispielsweise einem Deckel oder einem ringförmigen Halteelement. Derartige Getränkebereiter werden insbesondere für die Zubereitung von Kaffee oder Tee oder zum Aufschäumen von Milch benutzt.

### STAND DER TECHNIK

Aus dem Stand der Technik sind Stempelfilter-Kaffeebereiter, die oft auch als "French-Press"-Kaffeebereiter bezeichnet werden, seit langem bekannt. Diese Getränkebereiter umfassen normalerweise ein nach oben offenes, zylindrisches Glasgefäss, in dem ein Filterkolben vertikal verschiebbar angeordnet ist. Der Filterkolben umfasst eine Kolbenstange, an deren unterem Ende ein Stempelfilter mit einem feinen Draht- oder Kunststoffnetz angebracht ist. Die Kolbenstange ist durch einen Deckel hindurchgeführt, der das Gefäss nach oben hin überdeckt.

Ein solcher Getränkezubereiter ist aus dem Dokument DE 92 03 171 bekannt.

Zur Zubereitung von beispielsweise Tee oder Kaffee werden Teeblätter oder gemahlene Kaffeebohnen in das Glasgefäss gegeben und mit heissem Wasser aufgegossen. Die Mischung wird einige Minuten stehengelassen. Anschliessend wird der Filterkolben in das Glasgefäss eingesetzt und hinabgedrückt. Dabei trennt der Stempelfilter den trinkfertigen Kaffee vom ausgelaugten Kaffeepulver. Zum Ausgiessen des Kaffees ist am oberen Rand des Glasgefässes normalerweise ein schnabelartiger Ausgiesser ausgebildet.

Um einen Spritzschutz zu gewährleisten, ist der Deckel in der Regel mit einer umlaufenden Schürze, die im Bereich des Ausgiessers durchbrochen ist, lose in das obere Ende des Glasgefässes eingeschoben. Da das Glasgefäss erhebliche Produktionstoleranzen aufweisen kann, ist der Aussendurchmesser dieser Schürze in der Regel ein wenig kleiner als der Innendurchmesser der oberen Öffnung des Gefässes, und die Verbindung zwischen Gefäss und Deckel ist daher normalerweise völlig lose. Durch die lose Verbindung des Glasgefässes mit dem Deckel entsteht die Gefahr, dass beim Hinunterdrücken des Stempelfilters der Deckel verrutscht und das Getränk aus dem Glasgefäss hinausspritzen kann. Des Weiteren kann wegen dem losen Aufliegen des Deckels auf dem Glasgefäss bei unsachgemässer Handhabung oder wenn der Getränkebereiter umkippt, heisse Flüssigkeit aus dem Getränkebereiter austreten, wodurch fertiger Kaffee verschüttet wird und sich der Benutzer verbrühen kann.

### DARSTELLUNG DER ERFINDUNG

Es ist also eine Aufgabe der vorliegenden Erfindung, einen Getränkebereiter anzugeben, bei dem das Verrutschen eines Einsatzteils, z.B. eines Deckels mit heruntergezogener Schürze, im Gefäss verhindert wird, um damit die Sicherheit vor Verbrühungen zu erhöhen. Zur Lösung dieser Aufgabe wird ein Getränkebereiter vorgeschlagen, wie er in Anspruch 1 angegeben ist. Vorteilhafte Ausgestaltungen der Erfindung sind in den abhängigen Ansprüchen angegeben.

Die vorliegende Erfindung stellt also einen Getränkebereiter mit den folgenden Merkmalen zu Verfügung:
ein nach oben offenes Gefäss aus einem hitzebeständigen Material, insbesondere Glas, mit einem Gefässboden, einer umlaufenden Seitenwand und einer oberen Öffnung;
ein Gefässhalter, welcher die Seitenwand des Gefässes zumindest teilweise umgreift; und
ein Einsatzteil, welches in die obere Öffnung des Gefässes eingesetzt ist und in dieses hineinragt, beispielsweise mit einem schürzenartigen Bereich.

Der Gefässhalter weist mindestens ein über das Gefäss nach oben hin überstehendes Element auf, welches eine erste Eingriffsstruktur, beispielsweise eine Nut oder einen ersten Gewindeabschnitt, aufweist. Zumindest eine zweite Eingriffsstruktur in Form zum Beispiel einer Nase oder einem zweiten Gewindeabschnitt ist am Einsatzteil ausgebildet, welche mit der ersten Eingriffsstruktur am Gefässhalter so zusammenwirkt, dass das Einsatzteil gegenüber dem Gefässhalter mittels einer Drehbewegung lösbar verriegelbar ist. Im Falle einer Nut und einer Nase können diese bezüglich Einsatzteil und Gefässhalter auch vertauscht sein.

Eine derartige Ausgestaltung erlaubt es, ein beliebiges Einsatzteil, wie zum Beispiel einen Deckel oder einen Haltering für einen Filter, am Gefäss verriegelbar zu befestigen, ohne dass bei einem Umkippen des Getränkebereiters die Gefahr besteht, dass sich das Einsatzteil löst und dadurch heisses Getränk verschüttet wird oder sich der Benutzer verbrüht.

Bevorzugt bilden die Eingriffsstrukturen eine Bajonettverbindung, d.h. sie sind so ausgebildet, dass das Einsatzteil zunächst vertikal von oben in das Gefäss einschiebbar ist und dann im Wesentlichen um eine vertikale Achse, also in einer horizontalen Richtung, gegenüber dem Gefäss um einen vorbestimmten, begrenzten Winkelbereich verdrehbar ist. Bei dieser Bewegung geraten die Eingriffsstrukturen in Eingriff miteinander. In einer vorgegebenen Endposition bilden die Eingriffsstrukturen gegenseitig einen Anschlag, der eine weitere Drehung über die Endposition hinaus verhindert.

Insbesondere kann es sich bei dem Getränkebereiter um einen "French Press"-Getränkebereiter handeln. Das Gefäss weist dann eine zylindrische Grundform auf, wobei es sich gegebenenfalls in einem oberen Randbereich nach oben hin ein wenig aufweiten kann. Es besteht bevorzugt aus Glas und kann einwandig oder doppelwandig ausgestaltet sein. Im Gefäss ist ein vertikal verschiebbarer Filterkolben mit einer Kolbenstange angeordnet, an deren oberem Ende ein Betätigungselement, zum Beispiel in Form eines Griffknopfes, angebracht ist und an deren unterem Ende ein siebartiger Stempelfilter angebracht ist, welcher geeignet ist, den Durchtritt von Flüssigkeit zu erlauben und dabei Feststoffe zurückzuhalten. Das Einsatzteil, beispielsweise ein Deckel, ist von der Kolbenstange durchsetzt, so dass der Filterkolben über das Griffelement von aussen bedient werden kann. Wenn das Einsatzteil ein Deckel ist, kann es zur Führung des Filterkolbens dienen und dessen Bewegungsspielraum einschränken, um ausschliesslich eine vertikale Bewegung zuzulassen.

Während bei konventionellen "French Press"-Getränkebereitem der Ausgiesser am Gefäss ausgebildet ist, erlaubt es die vorliegende Erfindung insbesondere, den Ausgiesser direkt am Einsatzteil auszugestalten, ohne dass die Gefahr besteht, dass das Einsatzteil während des Ausgiessens samt Ausgiesser aus dem Gefäss herausfällt.

Wenn das Einsatzteil als Deckel mit einer das Gefäss nach oben hin zumindest teilweise überdeckenden Deckwand ausgebildet ist, welche gemeinsam mit dem Gefäss einen Gefässinnenraum begrenzt, ragt der Deckel bevorzugt mit einer sich vertikal nach unten erstreckenden Schürze von oben in das Gefäss hinein und weist bevorzugt an seiner radialen Aussenseite eine umlaufende Dichtung auf, welche geeignet ist, eine Abdichtung zwischen dem Deckel und dem Gefäss im Bereich der inneren Mantelfläche von dessen Seitenwand herzustellen. Durch eine solche Dichtung ist gewährleistet, dass beim Ausgiessen keine Flüssigkeit unkontrolliert zwischen dem Gefäss und dem Deckel austreten kann. Die ins Gefäss hineinragende Schürze des Deckels kann in diesem Fall beispielsweise schlitzförmige Durchbrechungen aufweisen, um das Ausgiessen des Getränkes durch die Durchbrechungen hindurch über einen am Gefäss ausgebildeten Ausgiesser zu ermöglichen. Der Ausgiesser kann aber auch am Deckel selbst ausgebildet sein, wie dies vorstehend schon angegeben wurde. In diesem Fall weist der Deckel vorzugsweise eine zwischen der Kolbenstange und dem Ausgiesser angeordnete, die Deckwand durchbrechende Ausgiessöffnung auf, welche eine Verbindung zwischen dem Gefässinnenraum und dem Ausgiesser bildet, um Flüssigkeit durch die Ausgiessöffnung hindurch über den Ausgiesser aus dem Gefäss auszugiessen. Dabei ist es möglich, die Ausgiessöffnung nach aussen hin einfach verschliessbar zu gestalten, z.B. durch einen von aussen zugänglichen Hebel, um Wärmeverluste durch den Deckel zu minimieren.

Das Einsatzteil kann statt als Deckel auch als ringförmiges Halteelement ausgestaltet sein, welches dazu ausgebildet ist, beispielsweise mittels eines umlaufenden Ringflansches auf der Oberkante des Gefässes aufzuliegen und dabei einen Filtereinsatz zu halten. Der Filtereinsatz liegt dann z.B. mittels eines Auflageflansches auf dem Halteelement auf und dient dazu, feste Anteile im Getränk von flüssigen Anteilen zu trennen. Der Filtereinsatz weist dann bevorzugt eine sich in einer vertikalen Richtung von einem oberen Endbereich zu einem unteren Endbereich des Filtereinsatzes erstreckende, vorzugsweise zylindrische Seitenwand sowie ein mit der Seitenwand verbundenes, den Filtereinsatz nach unten hin begrenzendes Bodenteil auf. Das Halteelement ragt zumindest teilweise von oben in das Gefäss hinein. Der Ausgiesser kann wahlweise am Gefäss oder am Halteelement ausgebildet sein. In einer bevorzugten Ausgestaltung ist der Ausgiesser am Gefäss ausgebildet, und das Halteelement weist eine sich in das Gefäss hinein erstreckende Schürze auf, an deren äusserer Mantelfläche eine umlaufende Dichtung ausgebildet ist. Es weist dann oberhalb der umlaufenden Dichtung in der Schürze mindestens eine Durchbrechung auf, durch welche Flüssigkeit ausgiessbar ist.

In einer möglichen Ausgestaltung umfasst der Gefässhalter einen oberen, die Seitenwand des Gefässes umgreifenden Ring sowie eine Mehrzahl von sich in Längsrichtung des Gefässes erstreckenden Streben, welche indirekt im unteren Bereich des Gefässes, beispielsweise über einen unteren umgreifenden Ring, oder unterhalb der Bodenfläche des Gefässes direkt miteinander verbunden sind.

Zum einfachen Ergreifen des Getränkebereiters kann der Gefässhalter einen Haltegriff aufweisen. Das Gefäss kann aber zum Beispiel auch selbst einen integrierten Handgriff aufweisen, der zum Beispiel einstückig mit dem Gefäss gefertigt sein kann.

Erfindungsgemäss übersteht der Gefässhalter selbst mit einem Seitenwandbereich die Oberkante des Gefässes, beispielsweise mit einem das Gefäss im Bereich seines oberen Endes umgreifenden ringförmigen Bereich. Bevorzugt erstreckt sich dieser Bereich über einen erheblichen Winkelbereich, z.B. über mindestens 30°. Dieser überstehende Bereich des Gefässhalters kann als die erste Eingriffsstruktur zumindest eine Nut, bevorzugt zwei sich diametral gegenüberliegende Nuten auf seiner inneren Mantelfläche aufweisen, welche beispielsweise zusammen mit einer bzw. zwei Nasen, die auf einer äusseren Mantelfläche des Einsatzteiles angebracht ist, als Bajonettverschluss wirkt bzw. wirken. Die Nut kann beispielsweise aus einer vertikalen, nach oben hin offenen Einlassnut sowie einer daran ansetzenden, sich in Umfangsrichtung erstreckenden, horizontalen Radialnut bestehen, um ein einfaches und schnelles Verriegeln vom Gefäss mit dem Einsatzteil zu ermöglichen.

### KURZE BESCHREIBUNG DER ZEICHNUNGEN

Die Erfindung wird im Folgenden anhand der Zeichnungen beschrieben, in denen zeigen:
- Fig. 1: eine perspektivische Ansicht eines Getränkebereiters gemäss einer ersten, nicht erfindungsgemässen Ausführungsform in unverriegeltem Zustand;
- Fig. 2: eine perspektivische Ansicht des Getränkebereiters der Fig. 1 in verriegeltem Zustand;
- Fig. 3: einen zentralen Längsschnitt in der Ebene A-A durch den Getränkebereiter der Fig. 1;
- Fig. 4: eine perspektivische Ansicht eines Getränkebereiters gemäss einer zweiten, nicht erfindungsgemässen Ausführungsform;
- Fig. 5: eine perspektivische Ansicht des Getränkebereiters der Fig. 4. in unverriegeltem Zustand;
- Fig. 6: eine perspektivische Ansicht des Getränkebereiters der Fig. 4 in verriegeltem Zustand;
- Fig. 7: eine Teilansicht eines zentralen Längsschnittes in der Ebene B-B durch den Getränkebereiter der Fig. 4; sowie
- Fig. 8: eine perspektivische Teilansicht eines teilzerlegten Getränkebereiters gemäss einer erfindungsgemässen Ausführungsform.

### BESCHREIBUNG BEVORZUGTER AUSFÜHRUNGSFORMEN

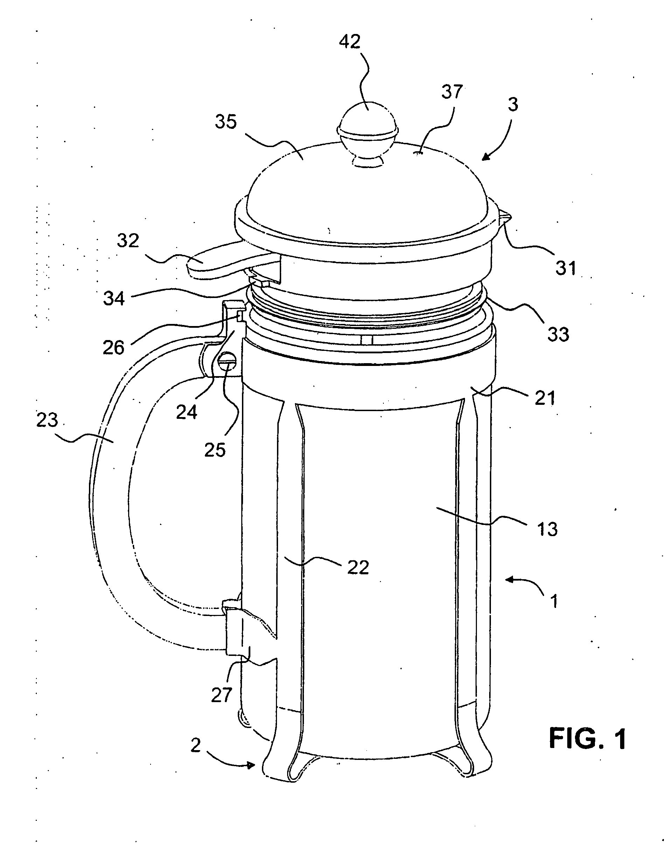

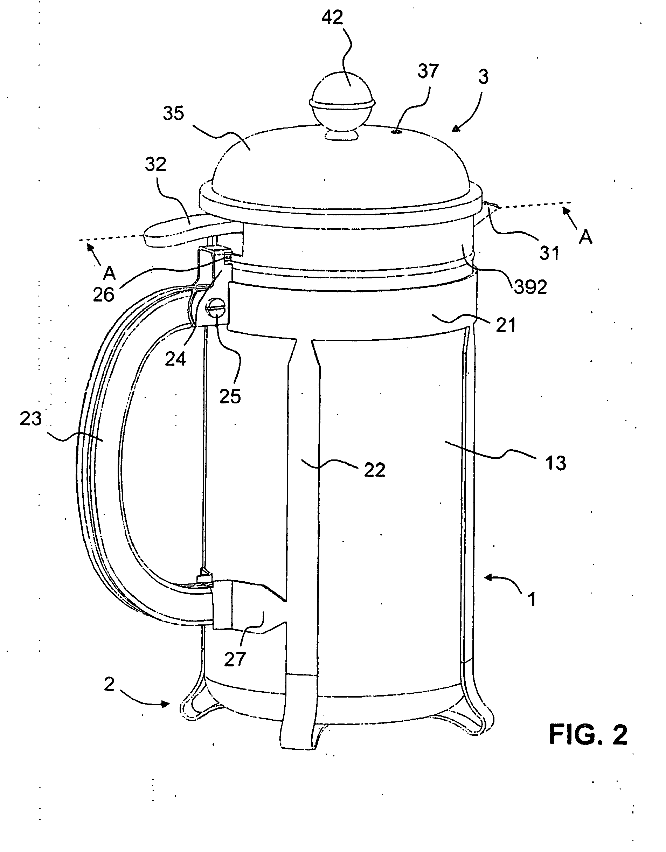

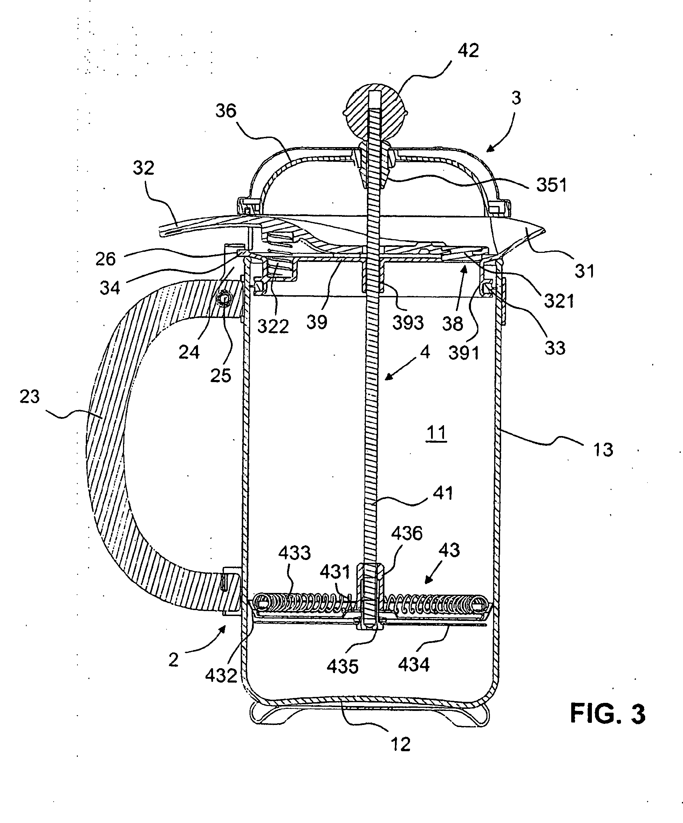

Die Figuren 1 bis 3 zeigen in unterschiedlichen Darstellungen ein erstes Ausführungsbeispiel eines nicht erfindungsgemässen Getränkebereiters.

Der Getränkebereiter weist ein zylindrisches, nach oben hin offenes Glasgefäss 1 mit einer umlaufenden Seitenwand 13 und einem im Wesentlichen flachen, aber leicht nach oben hin gewölbten Boden 12, einen Gefässhalter 2 sowie einen Deckel 3 auf. In den vorliegenden Darstellungen ist das Glasgefäss undurchsichtig (opak) dargestellt, es kann aber auch durchsichtig oder durchscheinend sein.

Im Glasgefäss ist ein Filterkolben 4 angeordnet, welcher eine Kolbenstange 41, ein an deren oberem Ende angebrachtes knopfförmiges Betätigungselement 42 sowie einen am unteren Ende der Kolbenstange angebrachten Stempelfilter 43 von an sich bekannter Bauart umfasst. Die Kolbenstange ist vertikal angeordnet und durchsetzt den Deckel 3. Der Stempelfilter 43 umfasst eine obere Lochplatte 431, die an ihrem äusseren Rand hochgezogen und mit einer Vielzahl von kleinen Öffnungen versehen ist. Durch diese Öffnungen ist eine toroidale Drahtspule 433 gefädelt. Ein feines Drahtnetz 432 liegt auf der Unterseite der Lochplatte 431 auf und ist über die Drahtspule 433 hinweg nach oben gezogen. Das Drahtnetz 432 ist mit einer unterhalb des Drahtnetzes parallel zur Lochplatte angebrachten, stern- oder lochplattenartigen Fixierplatte 434 nach unten hin fixiert. Mit einer gemeinsamen Fixierschraube 435, die in eine Gegenmutter 436 eingreift, sind die Lochplatte 431, das Drahtnetz 432 und die Fixierplatte 434 an der Kolbenstange gesichert.

Der Deckel 3 ragt mit einem schürzenartigen Abschnitt 391 teilweise in das Glasgefäss 1 hinein. Eine untere Deckwand 39 überdeckt die Öffnung des Glasgefässes 1 weitgehend und begrenzt zusammen mit dem Glasgefäss den Gefässinnenraum 11. In der unteren Deckwand 39 ist eine Ausgiessöffnung 38 ausgebildet. Ausgehend von der unteren Deckwand 39 erstreckt sich an deren äusserem Rand eine zylindrische Seitenwand 392 nach oben, die von einem Ausgiesser 31 sowie von einer Ausnehmung für einen Hebel 32 unterbrochen wird. Ebenfalls ausgehend von der unteren Deckwand 39 erstreckt sich eine umlaufende, zylindrische Schürze 391 von etwas geringerem Durchmesser nach unten in das Gefäss hinein. Von der Schürze aus erstreckt sich ein Paar ringförmiger, beabstandeter Stege nach aussen, die eine Aufnahme für eine umlaufende, ringförmige Dichtung 33 mit einer radial nach aussen vorstehenden Dichtlippe bilden. Hierdurch wird nach dem Einstecken des Deckels 3 eine Abdichtung zwischen dem Gefäss 1 und dem Deckel gebildet, die verhindert, dass Flüssigkeit zwischen Gefäss und Deckel austreten kann.

Am Deckel 3 ist ein sich oberhalb der unteren Deckwand 39 quer zur Kolbenstange 41 erstreckender, langgestreckter Hebel 32 um eine horizontale Achse schwenkbar angebracht. Im Bereich seines vorderen Endes weist der Hebel einen Verschlusskörper 321 auf, um die Ausgiessöffnung 38 zu verschliessen. An seinem hinteren, dem Ausgiesser 31 abgewandten Ende steht der Hebel 32 mit einem Betätigungsbereich aus dem Deckel 3 heraus radial vor und lässt sich durch Druck mit dem Daumen des Benutzers nach unten leicht um seine horizontale Schwenkachse verschwenken, so dass der Verschlusskörper 321 von der Ausgiessöffnung 38 abgehoben wird und die Ausgiessöffnung freigibt. In Richtung seiner ersten Stellung ist der Hebel durch eine Schraubenfeder 322 federbelastet, um sicherzustellen, dass die Ausgiessöffnung 38 verschlossen ist, solange der Hebel nicht bewusst betätigt wird. Die Schraubenfeder 322, welche in die verschliessende Stellung vorbelastet ist, ist im hinteren, dem Ausgiesser 31 abgewandten Bereich des Hebels, noch innerhalb des Deckels 3 ausgebildet. Um die Kolbenstange 41 durch den Deckel 3 durchzurühren, weist der Hebel eine Durchgangsöffnung auf, kann aber auch seitlich um die Kolbenstange herumgeführt sein.

Von der Oberkante der zylindrischen Seitenwand des Deckels 3 ausgehend, erstreckt sich eine nach oben gewölbte, doppelwandige obere Kuppel, bestehend aus einer inneren Deckwand 36 und einer äusseren Deckwand 35. Durch die doppelwandige Ausgestaltung der oberen Kuppel wird der Wärmeverlust durch den Deckel hindurch minimiert. Zudem ermöglicht es diese Gestaltung, die äussere Deckwand unabhängig von irgendwelchen Stabilitätsanforderungen ästhetisch ansprechend auszuführen, z.B. aus einem dünnen Blech. In eine zentrale Öffnung der inneren Deckwand 35 ist eine vertikale Führungshülse 351 eingesetzt, in welcher die Kolbenstange 41 des Filterkolbens 4 geführt ist. Der Hebel 32 und die untere Deckwand 39 weisen jeweils eine Durchgangsöffnung auf, durch welche hindurch die Kolbenstange ebenfalls geführt ist. Eine weitere Führungshülse 393 ist einstückig mit der unteren Deckwand 39 ausgebildet und erstreckt sich von dieser aus nach unten.

Der Gefässhalter 2 umfasst einen Haltering 21, der die Seitenwand 13 des Glasgefässes 1 im oberen Bereich des Gefässes umgreift, sowie sich in Längsrichtung des Gefässes erstreckende Streben 22. Diese Längstreben bilden im Bereich, wo die Seitenwand 13 des Glasgefässes 1 auf den Boden 12 trifft, nach aussen und nach unten ragende Füsse, die es erlauben, den Getränkebereiter auf eine ebene Unterlage zu stellen, ohne dass das durch das Getränk erwärmte Glasgefäss 1 in Berührung mit der Unterlage kommt. Unterhalb des Bodens 12 des Glasgefässes sind die Längsstreben 22 miteinander verbunden. Ein Handgriff 23 ist an seinem oberen Ende mit dem Haltering 21 verbunden und an seinem unteren Ende über eine, zwei Längstreben 22 verbindende Querstrebe 27 mit dem Gefässhalter 2 verbunden.

Ein das Glasgefäss 1 überstehendes, bügelartiges Element 24 mit zwei Schenkeln und einem diese verbindenden Verbindungsbereich ist mittels einer Fixierschraube 25 am Haltegriff 23 befestigt. Das Element ragt über den Haltering 21 sowie die Oberkante des Glasgefässes 1 hinaus. An dem das Glasgefäss überragenden Teil ist im Bereich eines der Schenkel des Bügels eine Ausnehmung ausgebildet, welche eine Radialnut 26 bildet. Diese ist dazu ausgebildet, eine Nase 34 aufzunehmen, welche an der Aussenseite der Seitenwand 392 des Deckels 3 unterhalb des Verschlusshebels 32 angebracht ist. Durch eine Drehbewegung über einen kleinen Winkelbereich und das Einrasten der Nase 34 in die Radialnut 26 wird ein Bajonettverschluss gebildet, durch den der Deckel 3 lösbar mit dem Glasgefäss 1 verriegelbar ist. Eine Markierung 37 auf der Aussenseite der oberen, äusseren Deckwand 35 des Deckels 3 kennzeichnet die richtige Positionierung zum Einrasten und Verriegeln des Deckels 3 mit dem Glasgefäss 1.

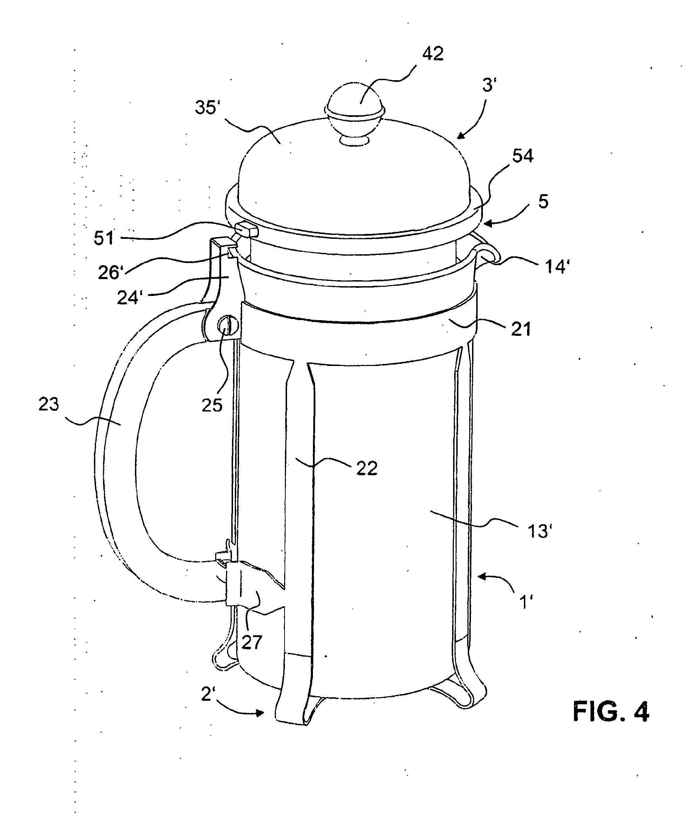

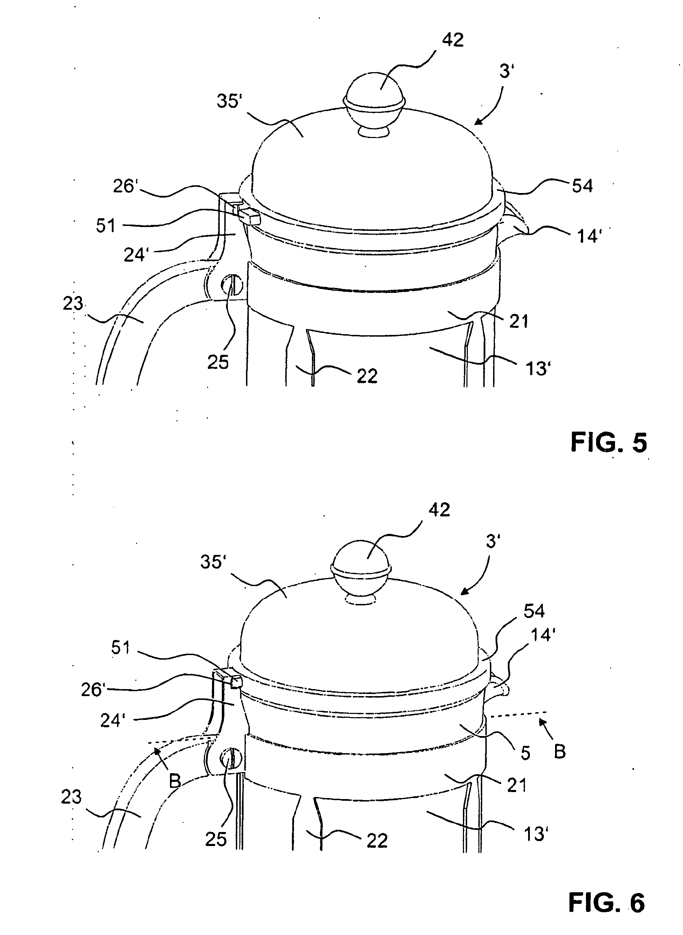

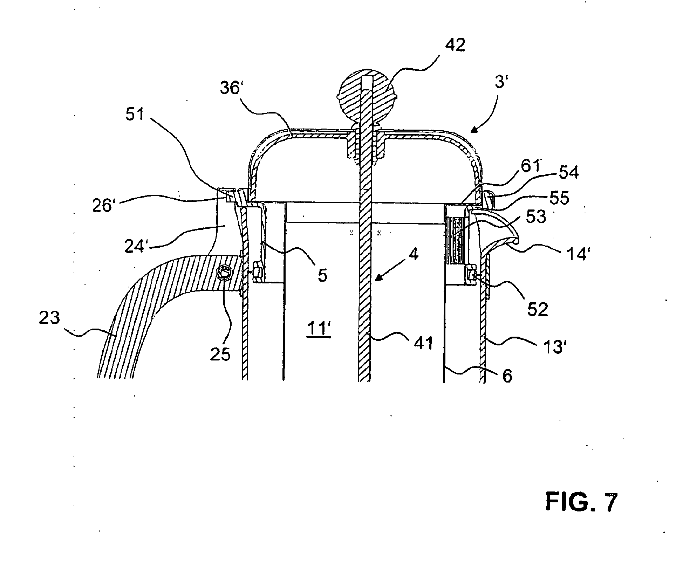

Ein weiteres, ebenfalls nicht erfindungsgemässes Ausführungsbeispiel ist in den Figuren 4 bis 7 illustriert, in denen gleiche Teile mit den gleichen Bezugszeichen wie in den Figuren 1 bis 3 versehen sind. In dieser Ausführungsform weist der Getränkebereiter im Gegensatz zur ersten Ausführungsform zusätzlich einen Filtereinsatz 6 sowie ein ringförmiges Halteelement 5 hierfür auf.

Der Filtereinsatz 6 weist eine umlaufende Seitenwand sowie einen nicht dargestellten Boden auf, der unten an die Seitenwand angrenzt. Die zylinderförmige Seitenwand weist eine Vielzahl von kleinen Öffnungen oder Löchern auf, durch welche Flüssigkeit hindurch treten kann, welche aber kleiner sind im Vergleich zu den festen Getränkebestandteilen, die bei der Getränkezubereitung herausgefiltert werden sollen. Ein umlaufender, radial nach aussen stehender Flansch 61 ist an der Oberkante des Filtereinsatzes 6 angebracht. Der Flansch dient dazu, dass der Filtereinsatz auf dem Halteelement 5 aufliegen kann, in welches der Filtereinsatz hineingeschoben wird.

Der Filtereinsatz 6 dient dazu, während dem Hinunterdrücken des Filterkolbens 4 feste Bestandteile des Getränkes von flüssigen zu trennen. Durch die Benutzung des Filtereinsatzes kann der Stempelfilter 43 schneller und mit weniger Krafteinsatz nach unten gedrückt werden, weil flüssige Getränkebestandteile nicht nur durch den Stempelfilter selbst verdrängt werden können sondern auch durch die Seitenwand des Filtereinsatzes 6 hindurch. Des Weiteren wird durch den Filtereinsatz das Glasgefäss beim Herabdrücken des Filterkolbens weniger stark belastet, wodurch die Gefahr eines Glasbruchs vermindert wird. Schliesslich erlaubt der Filtereinsatz eine grössere Gestaltungsfreiheit in Bezug auf die Form des Glasgefasses 1'.

Auf dem oberen Rand des Glasgefässes 1' liegt das Halteelement 5 auf, das zu diesem Zweck eine radial vorstehende Auflagestruktur in Form eines umlaufenden, radialen Auflageflansches 55 aufweist. Das Halteelement erstreckt sich mit einer ringförmigen, kreiszylindrischen Seitenwand (Schürze) so weit von oben her in das Glasgefäss 1' hinein, dass es nach unten hin den Ausgiesser 14' überragt, welcher in diesem Ausführungsbeispiel am Glasgefäss 1' ausgebildet ist. Im Bereich des unteren Endes des Halteelements 5 ist eine radial nach aussen weisende, umlaufende Dichtlippe 52 ausgebildet, die unterhalb des Ausgiessers 14' an der Innenseite der Seitenwand 13' des Glasgefässes anliegt und auf diese Weise eine Abdichtung zwischen dem Halteelement 5 und dem Glasgefäss 1' herstellt. In der Seitenwand des Halteelements sind über einen kleinen Winkelbereich hinweg eine Vielzahl von schlitzförmigen Durchbrechungen 53 vorhanden, die als Ausgussöffnungen dienen. Wegen des Vorhandenseins der Dichtlippe 52 kann Flüssigkeit nur durch diese Durchbrechungen 53 hindurch zum Ausgiesser 14' gelangen, wenn die Flüssigkeit aus dem Gefäss ausgegossen werden soll.

Die Kolbenstange 41 ist durch eine zentrale Öffnung in einem Deckel 3' hindurchgeführt. Das offene untere Ende des Deckels 3' lässt sich in das Halteelement 5 einschieben und an diesem lösbar fixieren. Zu diesem Zweck weist das Halteelement 5 einen sich nach oben hin erstreckenden, als Aufnahmering dienenden Ringflansch 54 auf, der sich vom radial äusseren Rand des Auflageflansches 55 aus nach oben erstreckt. Der Deckel 3' ist mittels einem in den Zeichnungen nicht sichtbaren bajonettartigen Verschluss mit dem Halteelement 5 lösbar verriegelt. Dazu ist eine auf der radialen Aussenseite am unteren Rand des Deckels 3' angebrachte Nase von oben her in eine auf der radialen Innenseite des Ringflansches 54 ausgebildete vertikale Einlassnut einschiebbar, an welche eine horizontale, sich über einen kleinen Winkelbereich von beispielsweise 5°-15° des Flanschumfanges erstreckende Radialnut angrenzt. Durch eine Drehbewegung des Deckels 3' greift die Nase in die Radialnut ein, wodurch Deckel 3' lösbar am Halteelement 5 verriegelt ist. Auf diese Weise lässt sich der Deckel 3' lösbar im Halteelement 5 fixieren. Stattdessen kann aber auch eine einfache Rastverbindung vorhanden sein. Der Deckel 3' ist doppelwandig ausgebildet mit einer äusseren Deckwand 35' und einer inneren Deckwand 36', welche den Gefässinnenraum 11' nach oben hin begrenzt.

Um das Halteelement 5 lösbar mit dem Glasgefäss 1' zu verriegeln, weist das Halteelement 5 auf der radialen Aussenseite des Ringflansches 54 eine Bajonett-Nase 51 auf, welche bezüglich der Durchbrechungen 53 auf der diametral gegenüberliegenden Seite angebracht ist. Wie im ersten Ausführungsbeispiel ist am Gefässhalter ein bügelartiges überstehendes Element 24' angebracht, das in dieser Ausführungsform etwas länger ausgebildet ist als im ersten Ausführungsbeispiel. Das überstehende Element 24' ist mittels der Fixierschraube 25 am Haltegriff 23 des Gefässhalters 2' angebracht und erstreckt sich entlang der Seitenwand 13' nach oben hin über den oberen Rand des Glasgefässes 1' hinaus. Auch dieses bügelförmige überstehende Element 24' weist im Bereich eines seiner Schenkel eine Ausnehmung auf, die eine Radialnut 26' bildet. Mittels einer Drehbewegung ist die Nase 51 des Halteelements 5 in die Radialnut 26' einführbar und an dieser nach Art eines Bajonettverschlusses verriegelbar. Durch die lösbar verriegelte Verbindung zwischen dem Halteelement 5 und dem Glasgefäss 1' sind die Durchbrechungen 53 im verriegelten Zustand in einer wohldefinierten Position zum Ausgiesser 14' hin gerichtet, wodurch das Getränk durch die Durchbrechungen 53 hindurch und über den Ausgiesser 14' ausschenkbar ist. Ein Verrutschen des Halteelements 5 oder des Deckels 3' wird durch das Verriegeln der beiden Eingriffsstrukturen 51 und 26 verhindert.

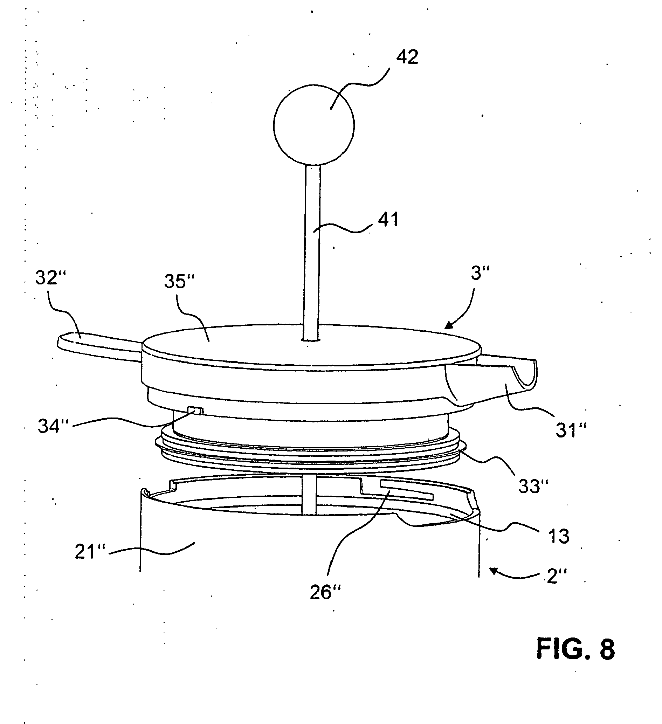

Ein erfindungsgemässes Ausführungsbeispiel ist in Figur 8 abgebildet. Die funktionellen Merkmale dieser Ausführungsform sind mit Ausnahme der Rastverbindung zwischen dem Deckel 3" und dem Gefässhalter 2" analog zu den im ersten Ausführungsbeispiel (Figuren 1 bis 3) beschriebenen Merkmalen.

Der Gefässhalter 2" steht mit einem das Glasgefäss umgreifenden Ring 21" über die Seitenwand 13 des Glasgefässes nach oben hin und entlang des gesamten Umfanges der Seitenwand 13. Im überstehenden Teil des Ringes 21 " ist an der oberen Kante eine erste Aussparung ausgebildet, welche Raum lässt für den Ausgiesser 31" des Deckes 3" sowie zusätzlichen Raum lässt, um eine Drehbewegung des Deckels 3" im Ring 21" über einen kleinen Winkelbereich hinweg zuzulassen. Auf der diametral gegenüberliegenden Seite der ersten Aussparung ist eine zweite Aussparung an der Oberkante des Ringes 21" ausgebildet, um das Hinunterdrücken des Verschlusshebels 32" in verriegeltem Zustand zu ermöglichen.

Der Ring 21 " des Gefässhalters 2" weist auf der Innenseite seiner Mantelfläche zwei identische Eingriffsstrukturen 26" auf, welche einander je diametral gegenüberliegen. Die Eingriffsstrukturen 26" bestehen je aus einer vertikal ausgebildeten, nach oben offenen Einlassnut und einer im unteren Bereich daran angrenzenden, horizontal verlaufenden Radialnut. Die beiden, auf der Aussenseite des Deckels 3" ausgebildeten Nasen 34", welche je beim halben Winkel zwischen Ausgiesser 31 " und Verschlusshebel 32" angeordnet sind, sind derartig ausgestaltet, dass sie beim korrekten Einsetzen des Deckels 3" in die vertikalen Einlassnuten der Eingriffsstrukturen 26" einführbar sind. Durch eine Drehbewegung über einen kleinen Winkelbereich werden die Nasen 34" in die Radialnuten der Eingriffstrukturen 26" eingeführt und rasten bei vollständig ausgeführter Drehbewegung ein. Dadurch ist der Deckel 3" lösbar mit dem Gefässhalter 2" verriegelt.

Die Erfindung ist selbstverständlich nicht auf das vorstehende Beispiel beschränkt, und eine Vielzahl von Abwandlungen ist möglich. So können insbesondere die beiden Eingriffstrukturen 26" sowie 34", jeweils passend zueinander, auch anders ausgebildet sein. Statt rechtwinkliger Nasen können z.B. zylindrische Bajonettzapfen vorhanden sein. Statt des in den Zeichnungen dargestellten Gefässhalters kann auch ein beliebiger anderer Halter verwendet werden, sofern er ein über das Glasgefäss überstehendes Element aufweist. Auch kann ein beliebig anders gestalteter Deckel mit oder ohne Ausgiesser und mit oder ohne Verschlussmechanismus verwendet werden. Eine Vielzahl weiterer Abwandlungen ist möglich.

### BEZUGSZEICHENLISTE

- 1,1': Glasgefäss
- 11, 11': Gefässinnenraum
- 12: Boden
- 13, 13': Seitenwand
- 14': Ausgiesser
- 2, 2', 2": Gefässhalter
- 21, 21": Ring
- 22: Längsstreben
- 23: Haltegriff
- 24, 24': Überstehendes Element
- 25: Fixierschraube
- 26, 26', 26": Bajonett-Radialnut
- 27: Querstrebe
- 3, 3', 3": Deckel
- 31, 31": Ausgiesser
- 32, 32": Verschlusshebel
- 321: Verschlusskörper
- 322: Druckfeder
- 33, 33": Dichtring
- 34, 34": Bajonett-Nase
- 35, 35', 35": Aussere Deckwand
- 351: Führungshülse
- 36, 36': Innere Deckwand
- 37: Markierung
- 38: Ausgiessöffnung
- 39: Untere Deckwand
- 391: Schürze
- 392: Seitenwand
- 393: Führungshülse
- 4: Filterkolben
- 41: Kolbenstange
- 42: Betätigungselement
- 43: Stempelfilter
- 431: Grundplatte
- 432: Drahtnetz
- 433: Drahtspule
- 434: Fixierplatte
- 435: Fixierschraube
- 436: Gegenmutter
- 5: Halteelement
- 51: Bajonett-Nase
- 52: Dichtring
- 53: Durchbrechung
- 54: Ringflansch
- 55: Auflageflansch
- 6: Filtereinsatz
- 61: Auflageflansch

## Patentansprüche

1. Getränkebereiter, umfassend
ein nach oben offenes Gefäss (1; 1') mit einem Gefässboden (12), einer umlaufenden Seitenwand (13; 13') und einer oberen Öffnung;
einen die Seitenwand des Gefässes (1; 1 ') zumindest teilweise umgreifenden Gefässhalter (2; 2'; 2");
ein Einsatzteil (3; 3"; 5), welches in die obere Öffnung des Gefässes (1; 1') eingesetzt ist und in dieses hineinragt;
wobei der Gefässhalter (2; 2'; 2") eine Seitenwand und mindestens eine erste Eingriffsstruktur (26; 26") aufweist, und
wobei das Einsatzteil (3; 3"; 5) mindestens eine zweite Eingriffsstruktur (34; 34"; 51) aufweist, welche mit der ersten Eingriffsstruktur (26; 26") so zusammenwirkt, dass das Einsatzteil (3; 3"; 5) gegenüber dem Gefässhalter (2; 2'; 2") mittels einer Drehbewegung lösbar verriegelbar ist,
**dadurch gekennzeichnet, dass**
der Gefässhalter (2") mindestens ein Element aufweist, welches über die Oberkante des Gefässes (1) nach oben hin übersteht, und welches durch einen Bereich (21 ") der Seitenwand gebildet ist, und dass dieser überstehende Bereich des Gefässhalters (2") als die erste Eingriffsstruktur zumindest eine Nut (26") auf seiner inneren Mantelfläche aufweist.

2. Getränkebereiter nach Anspruch 1, wobei der überstehende Bereich des Gefässhalters (2") als die erste Eingriffsstruktur zwei sich diametral gegenüberliegende Nuten (26") aufweist.

3. Getränkebereiter nach einem der Ansprüche 1 oder 2, wobei die Nut (26") aus einer vertikalen, nach oben hin offenen Einlassnut sowie einer daran ansetzenden, sich in eine Umfangsrichtung erstreckenden, horizontalen Radialnut besteht.

4. Getränkebereiter nach einem der vorhergehenden Ansprüche, wobei die Eingriffsstrukturen eine Bajonettverbindung bilden.

5. Getränkebereiter nach einem der vorhergehenden Ansprüche, wobei das Gefäss eine zylindrische Grundform aufweist, wobei der Getränkebereiter einen im Gefäss (1; 1') vertikal verschiebbaren Filterkolben (4) mit einer Kolbenstange (41) umfasst, an deren oberem Ende ein Betätigungselement (42) angebracht ist und an deren unterem Ende ein Stempelfilter (43) angebracht ist, welcher geeignet ist, den Durchtritt von Flüssigkeit zu erlauben und dabei Feststoffe zurückzuhalten, und wobei das Einsatzteil (3; 3"; 5) von der Kolbenstange (41) durchsetzt ist.

6. Getränkebereiter nach einem der Ansprüche 1 bis 5, wobei ein Ausgiesser (31; 31 ") am Einsatzteil (3; 3") ausgebildet ist.

7. Getränkebereiter nach einem der Ansprüche 1 bis 6, wobei das Einsatzteil als ein Deckel (3; 3") ausgestaltet ist, der eine das Gefäss (1) nach oben hin zumindest teilweise überdeckende Deckwand (36; 36') aufweist, welche gemeinsam mit dem Gefäss (1) einen Gefässinnenraum (11; 11') begrenzt.

8. Getränkebereiter nach einem der Ansprüche 1 bis 6, wobei das Einsatzteil als ein ringförmiges Halteelement (5) ausgestaltet ist, welches dazu ausgebildet ist, auf der Oberkante des Gefässes (1') aufzuliegen und dabei einen Filtereinsatz (6) zu halten.

9. Getränkebereiter nach einem der Ansprüche 1 bis 8, wobei das Einsatzteil (3; 3"; 5) an seiner radialen Aussenseite eine umlaufende Dichtung (33; 52) aufweist, welche geeignet ist, eine Abdichtung zwischen dem Einsatzteil (3; 3"; 5) und dem Gefäss (1; 1') im Bereich der inneren Mantelfläche von dessen Seitenwand (13, 13') herzustellen.

10. Getränkebereiter nach Anspruch 9, wobei das Einsatzteil (5) oberhalb der umlaufenden Dichtung (52) in seiner Seitenwand mindestens eine Durchbrechung (53) aufweist, durch welche Flüssigkeit ausgiessbar ist.

11. Getränkebereiter nach einem der Ansprüche 1 bis 10, wobei der Gefässhalter (2; 2') einen oberen, die Seitenwand (13; 13') des Gefässes (1; 1') umgreifenden Ring (21; 21") umfasst und sich in Längsrichtung des Gefässes (1; 1') erstreckende Streben (22), welche im unteren Bereich des Gefässes miteinander verbunden sind, und wobei das überstehende Element (24, 24') sich von dem Ring aus nach oben erstreckt.

12. Getränkebereiter nach einem der Ansprüche 1 bis 11, wobei der Gefässhalter (2; 2'; 2") einen Haltegriff (23) zum Ergreifen des Getränkebereiters aufweist.

## Claims

1. A beverage maker, comprising
an upwardly open receptacle (1; 1') with a receptacle bottom (12), a circumferential side wall (13; 13') and an upper opening;
a receptacle holder (2; 2'; 2") at least partially embracing the side wall of the receptacle (1; 1') ;
an insert (3; 3"; 5) which is inserted into the upper opening in the receptacle (1; 1') and projects into said receptacle;
wherein the receptacle holder (2; 2'; 2") has a sidewall and at least one first engagement structure (26; 26"), and
wherein the insert (3; 3"; 5) has at least one second engagement structure (34; 34"; 51) which interacts with the first engagement structure (26; 26") in such a manner that the insert (3; 3"; 5) is releasably lockable in relation to the receptacle holder (2; 2'; 2") by means of a rotational movement,
**characterized in that**
the receptacle holder (2") has at least one element that protrudes upward beyond the upper edge of the receptacle (1) and that is formed by a region (21") of the sidewall, and that said protruding region of the receptacle holder (2") has at least one groove (26") on its inner circumferential surface area, forming the first engagement structure.

2. The beverage maker as claimed in claim 1, wherein the protruding region of the receptacle holder (2") has two diametrically opposite grooves (26") forming the first engagement structure.

3. The beverage maker as claimed in claim 1 or 2, wherein the groove (26") consists of a vertical, upwardly open inlet groove and a horizontal radial groove which extends from the latter in a circumferential direction.

4. The beverage maker as claimed in any one of the preceding claims, wherein the engagement structures form a bayonet joint.

5. The beverage maker as claimed in any one of the preceding claims, wherein the receptacle has a cylindrical basic shape, wherein the beverage maker comprises a filter plunger (4) which is displaceable vertically in the receptacle (1; 1') and encompasses a plunger rod (41), to the upper end of which an actuating element (42) is fitted, and to the lower end of which a plunger filter (43) is fitted, said plunger filter being suitable to permit the passage of liquid and at the same time to retain solids, and wherein the plunger rod (41) passes through the insert (3; 3"; 5).

6. The beverage maker as claimed in any one of claims 1 to 5, wherein a spout (31; 31") is formed on the insert (3; 3").

7. The beverage maker as claimed in any one of claims 1 to 6, wherein the insert is configured as a lid (3; 3") which comprises a covering wall (36; 36') which at least partially covers the receptacle (1) upward and, together with the receptacle (1), bounds a receptacle interior (11; 11').

8. The beverage maker as claimed in one of claims 1 to 4, wherein the insert is configured as an annular retaining element (5) which is designed to rest on the upper edge of the receptacle (1') and, as it does so, to retain a filter insert (6).

9. The beverage maker as claimed in one of claims 1 to 8, wherein the insert (3; 3"; 5) comprises, on the radial exterior thereof, a circumferential seal (33; 52) which is suitable for producing a seal between the insert (3; 3"; 5) and the receptacle (1; 1') in the region of the inner surface area of the side wall (13, 13') thereof.

10. The beverage maker as claimed in claim 9, wherein the side wall of the insert (5) above the circumferential seal (52) comprises at least one aperture (53) through which liquid can be poured.

11. The beverage maker as claimed in one of claims 1 to 10, wherein the receptacle holder (2; 2') comprises an upper ring (21; 21") which embraces the side wall (13; 13') of the receptacle (1; 1'), and struts (22) which extend in the longitudinal direction of the receptacle (1; 1') and are connected to one another in the lower region of the receptacle, and wherein the protruding element (24, 24') extends upward from the ring.

12. The beverage maker as claimed in one of claims 1 to 11, wherein the receptacle holder (2; 2'; 2") comprises a handle (23) for grasping the beverage maker.

## Revendications

1. Préparateur de boisson, comprenant
un récipient (1 ; 1') ouvert vers le haut avec un fond de récipient (12), une paroi latérale périphérique (13; 13') et une ouverture supérieure;
un support de récipient (2; 2'; 2") entourant au moins en partie la paroi latérale du récipient (1; 1');
une partie rapportée (3; 3"; 5), qui est installée dans l'ouverture supérieure du récipient (1; 1') et qui pénètre dans celui-ci;
dans lequel le support de récipient (2; 2'; 2") présente une paroi latérale et au moins une première structure d'accrochage (26; 26"), et
dans lequel la partie rapportée (3; 3"; 5) présente au moins une deuxième structure d'accrochage (34; 34"; 51), qui coopère avec la première structure d'accrochage (26; 26"), de telle manière que la partie rapportée (3; 3"; 5) puisse être verrouillée de façon séparable par un mouvement de rotation par rapport au support de récipient (2; 2'; 2"),
**caractérisé en ce que**
le support de récipient (2") présente au moins un élément, qui dépasse vers le haut au-dessus de l'arête supérieure du récipient (1), et qui est formé par une région (21") de la paroi latérale, et **en ce que** cette région saillante du support de récipient (2") présente, formant la première structure d'accrochage, au moins une rainure (26") sur sa surface latérale intérieure.

2. Préparateur de boisson selon la revendication 1, dans lequel la région saillante du support de récipient (2") présente, formant la première structure d'accrochage, deux rainures (26") diamétralement opposées.

3. Préparateur de boisson selon l'une quelconque des revendications 1 ou 2, dans lequel la rainure (26") se compose d'une rainure d'engagement verticale ouverte vers le haut ainsi que d'une rainure radiale horizontale qui s'y raccorde et qui s'étend en direction périphérique.

4. Préparateur de boisson selon l'une quelconque des revendications précédentes, dans lequel les structures d'accrochage forment un assemblage à baïonnette.

5. Préparateur de boisson selon l'une quelconque des revendications précédentes, dans lequel le récipient présente une forme de base cylindrique, dans lequel le préparateur de boisson comprend un piston de filtre (4) coulissant verticalement dans le récipient (1; 1'), avec une tige de piston (41) dont l'extrémité supérieure est munie d'un élément d'actionnement (42) et dont l'extrémité inférieure est munie d'un filtre à tampon (43), qui convient pour permettre le passage de liquide et en l'occurrence pour retenir des matières solides, et dans lequel la partie rapportée (3; 3"; 5) est traversée par la tige de piston (41).

6. Préparateur de boisson selon l'une quelconque des revendications 1 à 5, dans lequel un bec verseur (31; 31") est formé sur la partie rapportée (3; 3").

7. Préparateur de boisson selon l'une quelconque des revendications 1 à 6, dans lequel la partie rapportée est configurée sous la forme d'un couvercle (3; 3"), qui présente une paroi de recouvrement (36; 36') recouvrant au moins partiellement le récipient (1) vers le haut, et qui limite avec le récipient (1) un volume intérieur de récipient (11; 11').

8. Préparateur de boisson selon l'une quelconque des revendications 1 à 6, dans lequel la partie rapportée est configurée sous la forme d'un élément de maintien annulaire (5), qui est conçu pour s'appliquer sur l'arête supérieure du récipient (1') et maintenir ainsi un insert de filtre (6).

9. Préparateur de boisson selon l'une quelconque des revendications 1 à 8, dans lequel la partie rapportée (3; 3"; 5) présente sur son côté extérieur radial un joint d'étanchéité périphérique (33; 52), qui convient pour réaliser une étanchéité entre la partie rapportée (3; 3"; 5) et le récipient (1; 1') dans la région de la surface latérale intérieure de la paroi latérale (13, 13') de celui-ci.

10. Préparateur de boisson selon la revendication 9, dans lequel la partie rapportée (5) présente dans sa paroi latérale, au-dessus du joint d'étanchéité périphérique (52), un passage (53) par lequel du liquide peut être versé.

11. Préparateur de boisson selon l'une quelconque des revendications 1 à 10, dans lequel le support de récipient (2; 2') comprend un anneau supérieur (21; 21") entourant la paroi latérale (13; 13') du récipient (1; 1') et des branches (22) s'étendant dans la direction longitudinale du récipient (1; 1'), qui sont reliées les unes aux autres dans la région inférieure du récipient, et dans lequel l'élément saillant (24, 24') s'étend vers le haut à partir de l'anneau.

12. Préparateur de boisson selon l'une quelconque des revendications 1 à 11, dans lequel le support de récipient (2; 2'; 2") présente une poignée (23) pour saisir le préparateur de boisson.
